# EUROPEAN PATENT SPECIFICATION

(11) **EP 1 860 550 B1**
(45) Date of publication and mention of the grant of the patent: **05.07.2017**
(21) Application number: 07009169.9
(22) Date of filing: 07.05.2007
(51) Int. Cl.: G06F 9/44

(54) **Method and system for display area optimization in a role-based user interface**
Verfahren und System zur Anzeigeflächenoptimierung auf einer rollenbasierten Benutzerschnittstelle
Procédé et système d'optimisation de zone d'affichage dans une interface utilisateur basée sur le rôle

(30) Priority: 15.05.2006 US 383319
(43) Date of publication of application: 28.11.2007
(73) Proprietor: SAP SE, 69190 Walldorf (DE)
(72) Inventor: Friedland, Liam, Redwood City CA 94061 (US); Hilgers, Peer, 68789 St. Leon-Rot (DE)
(74) Representative: Müller-Boré & Partner Patentanwälte PartG mbB

(56) References cited:
- EP-A2- 1 586 992
- EP-A2- 1 628 211
- US-A1- 2005 055 337
- US-A1- 2005 262 549
- US-A1- 2006 010 118
- US-B1- 6 266 059

## Description

### BACKGROUND OF THE INVENTION

Businesses large and small use computers to help in their operations. For example, enterprise resource management ("ERP") applications assist businesses to manage internal processes to accomplish business tasks and to manage interactions with the businesses' partners. A manufacturing concern undertakes substantial efforts to sell its products to customers, generating sales orders, quotes and other work product in the process. The manufacturing concern also typically buys materials and supplies from vendors, generating purchase orders and other work product as part of this concern. The manufacturing concern also must manage the hiring of employees to run its activities. The manufacturing concern may hire employees who specialize in each of these areas of operation - product sales, materials purchasing and human resources (among others). Thus, various employees may have predefined roles within their organization and responsibilities that are defined by their roles.

Traditionally, ERP applications are feature-rich computer applications. When used with very large businesses, an ERP application may have functionality to support customer-relationship management and other sales activity, materials management and other purchasing activity and human resources activity. ERP applications typically have user interfaces that match the rich feature set provided by the application. In known systems, such user interfaces may include long, comprehensive menus that list extensive arrays of virtually all functionality possible on the system. Such an excess of information may overwhelm a user and make the interface difficult and time-consuming to use. For example, a purchasing agent might need to peruse all the functions of a manager, or a human resources worker, or a sales agent, before finding the functions that he or she needs to perform his or her job. This can be frustrating and reduce efficiency.

Additionally, utilization of display screen "real estate" may be inefficient in known interfaces. For example, the amount of screen area devoted to certain types of functionality may not accurately reflect the amount of time users typically spend on the corresponding tasks. This can also be frustrating to users.

Document US 2005/0262549 A1 discloses method to generate a role-based user interface to be presented to a user including processing a security-relevant portion of user interface code associated with an application, determining a permission by processing application role information pertaining to the user and security policy information, wherein the security policy information is distinct from the user interface code, and associated with the security-relevant portion of the user interface code and with permissions relating to the application, and generating the role-based user interface associated with the application to selectively include a user interface element based upon the determined permission.

Document EP 1 628 211 A2 discloses a computer implemented method which provides a user interface for running a plurality of business processes. In said processes process data are handled in data objects by one or more service oriented business applications run on a computer. The method comprises providing a generalized information architecture for presenting modeled business situations, including work-roles, process instances, and business object instances for handing said data objects active in said plurality of business processes; providing an interface generator for directly generating a user interface from the generalized information architecture; and providing said user interface by said interface generator while identifying a particular instantiated business situation as a business context to which said user interface provides said interface.

Document US 6,266,059 B1 discloses a system, method, and medium for switching between application modes. The computer system for operating in one of two display modes of operation comprises a storage storing at least one application which is operable in a first display mode and second display mode, wherein a displayed menu of the application in the first display mode includes first menu options operable from a keyboard and a displayed menu of the application in the second display mode includes second menu options operable from a remote control device; a display device for displaying said menu options; a receiving device for receiving input from a user comprising a request for a menu; a processor for alerting the application in which display mode the processor is currently operating, for retrieving menu options appropriate for at least one of the first and second display modes, and for controlling the display device to display the first display menu options or the second menu options in accordance with the current display mode.

Document US 2005/0055337 A1 discloses a software module referred to as a content manager for loading and maintaining a variety of data and associated metadata in a computer database. The data may be loaded in the form of individual documents that support business preparation or sales presentations where only one copy of each document is stored in the database. The metadata may be loaded in the form of attributes of the documents. A table of users may also be loaded in the database including a geographic or business division for each user. A role is assigned to the user, thereby granting access privileges to certain views of the database. An online user interface software module is also provided for remote access to the documents. Searches may be conducted by a variety of attributes. Documents may be associated into visual presentations or multiple presentations merged into one presentation. Three types of presentations private, shared, and global are supported. The user may also print, view, or download, email, post to website, or fax the documents and presentations.

### BRIEF DESCRIPTION OF THE DRAWINGS

FIGs. 1-9 show example screen displays of a user interface according to embodiments of the present invention;
FIG. 10 shows a system according to embodiments of the present invention;
FIG. 11 shows a method according to embodiments of the present invention; and
FIGs. 12 and 13 show an example of switching between an administrative mode and a working mode according to embodiments of the present invention.

### DETAILED DESCRIPTION

Embodiments of the present invention address the above-noted concerns. The embodiments relate to a method and system wherein a user interface presents options for role-based functionality. In embodiments, the user interface may be for an ERP application. "Role-based" means related to a person's role within a business or other organization (e.g., the person is a manager, or a purchasing or sales agent, or works in human resources, or the like). The user interface may, thus, reduce a large, comprehensive set of possible activities within an organization to a condensed set that is more manageable and better tailored to an individual role. In this way, a user need not deal with overwhelming volumes of information as in conventional systems. Moreover, embodiments of the present invention provide an intuitive, easy-to-use interface via which multiple transactions may be launched and be simultaneously available for activation. The interface provides a tabbed representation of launched transactions, and navigation fields that make it easy to go from transaction to transaction or to launch new transactions.

Further, embodiments of the present invention may make optimal use of display screen real estate. For example, when a user is in an "administrative mode," to browse among data of multiple business objects, a full range of navigation functions may be displayed in the user interface, with a corresponding amount of display area devoted to them. By contrast, when a user is in a "working mode," working within a selected object or working within a report, navigation functions may be hidden to allow most screen area to be devoted to a working session of a transaction. This distribution of screen area more accurately reflects the amount of time a user spends in the administrative and working modes, respectively, and consequently makes the user interface easier and more convenient to use.

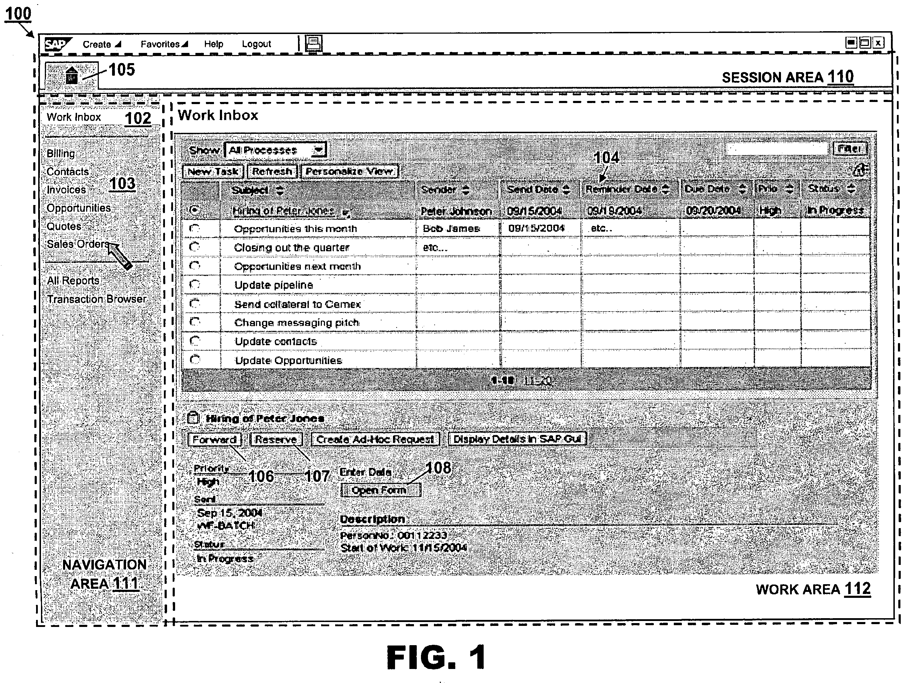

FIG. 1 shows an illustrative example of a screen display 100 of a user interface according to embodiments of the present invention. The display 100 may include a session area 110, a navigation area 111, and a work area 112. The contents of one or more of these areas may be determined by a user's role. For example, the navigation area 111 may include fields for navigating among general, aggregated role-based tasks and specific, categorized role-based activities. The work area 112 may be used to select and work on a task or activity. The session area 110 may include indicators of launched transactions corresponding to the specific, categorized role-based activities.

More specifically, the navigation area 111 may include a "Work Inbox" field 102 and a field 103 identifying a role-based set of activities. The role-based set of activities 103 may be tailored to a particular organizational role or even a particular individual. In this example the activities include "Billing," "Contacts," "Invoices," "Opportunities," "Quotes" and "Sales Orders." These categories are arbitrary and others are possible. The activities may include performing transactions, some of which may involve generating reports. Work Inbox 102 may correspond to an aggregated task window 104 comprising a general, aggregated list of selectable tasks, which may be of any type (though they belong to a particular role or individual). The session area 110 may include a "Home" icon 105 for displaying the navigation area if non-displayed and navigating from a different display to the Work Inbox, as described in more detail further on.

In FIG. 1, the Work Inbox 102 is currently selected as indicated by its being highlighted. A user may open a task corresponding to the Work Inbox 102 by, e.g. "clicking" with a mouse to select a task from among tasks 104. In the example of FIG. 1, the task "Hiring of Peter Jones" is selected. The tasks may correspond to, for example, business processes implemented by software objects. By clicking on a task, the user may activate and work on the business process.

FIG. 1 illustrates an example of the "administrative mode" mentioned earlier. In this administrative mode, a user can work on a number of diverse tasks 104 in the Work Inbox, or navigate to one of the role-based activities 103. Consequently, the full range of navigation functions is made available in the navigation area 111.

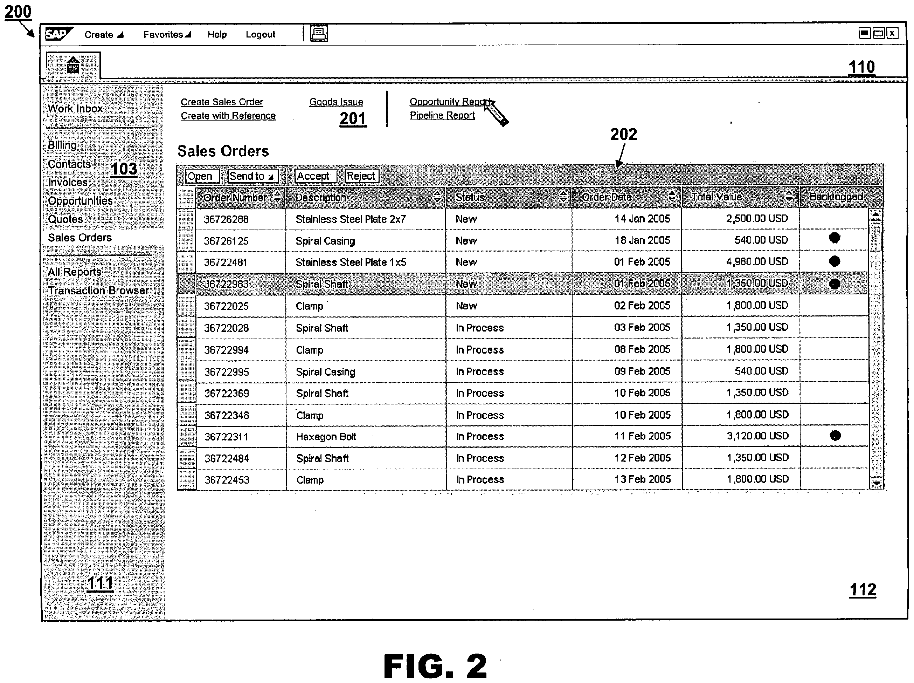

A user may select a given role-based activity by, e.g., clicking on an activity category from among activities 103 in the navigation area 111. In response, the user interface may collect/aggregate business objects from background application(s) that match both the user's role and the selected activity category. FIG. 2 shows an example of a display screen 200 resulting from clicking on the "Sales Orders" activity category in the activity set 103. The display includes a transaction field or window 201 listing one or more transactions associated with the selected activity, and an activity object window 202 comprising one or more objects associated with the selected activity, and with the particular role or individual. Thus, the objects 202 include a plurality of sales orders at some stage of processing.

In the example of FIG. 2, the transactions 201 include "Create Sales Order," "Create with Reference," "Goods Issue," "Opportunity Report" and "Pipeline Report." A transaction may be launched from the window 201. In the example of FIG. 2, the transaction "Opportunity Report" is selected while sales order 36722983 is highlighted, indicating that a transaction to generate an "Opportunity Report" is to be launched with respect to the selected sales order.

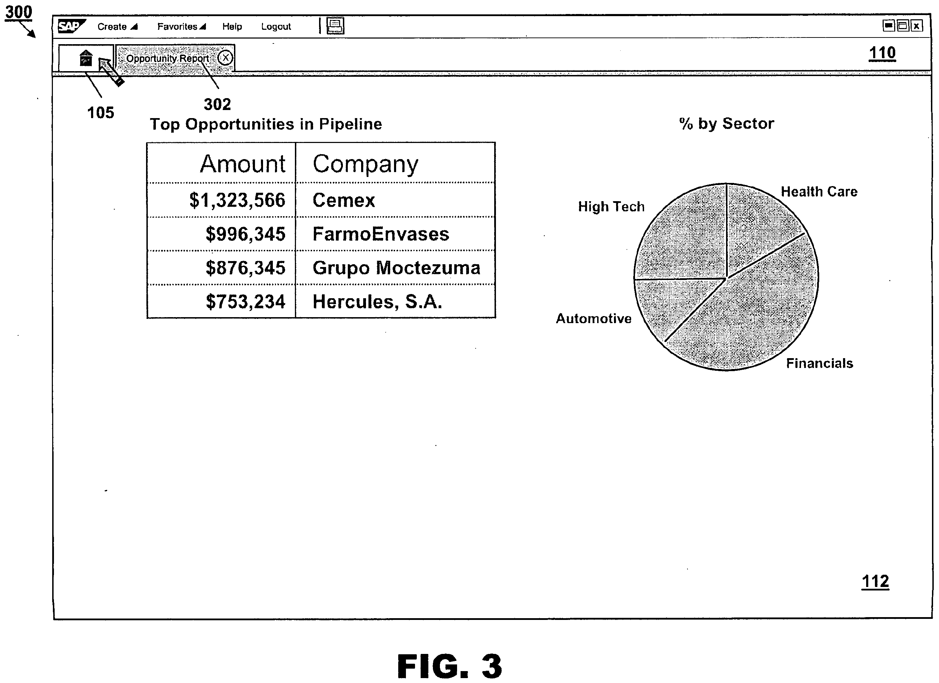

FIG. 3 shows an example of a display 300 corresponding to the selected transaction and sales order. FIG. 3 illustrates an example of the "working mode" mentioned earlier. A tab 302 may be displayed in the session area 110 to indicate the nature of the particular launched transaction (i.e., "Opportunity Report" in this example). The launched transaction may be a stateful (as opposed to stateless) session whose context is maintained in the background. The navigation area 111 is no longer displayed, which allows screen area to be devoted mainly to the work area 112 of the working session. Consequently, the user enjoys a more natural and accommodating experience, since the user may spend significant amounts of time in the working session. Meanwhile, the session area 110 remains displayed, allowing a user to easily navigate between launched transactions and the Work Inbox.

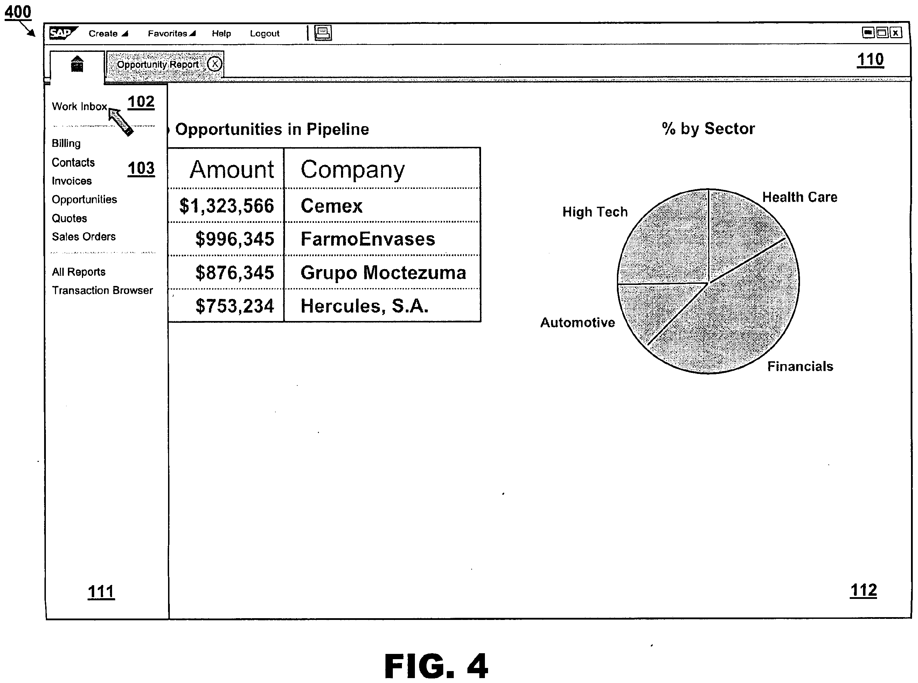

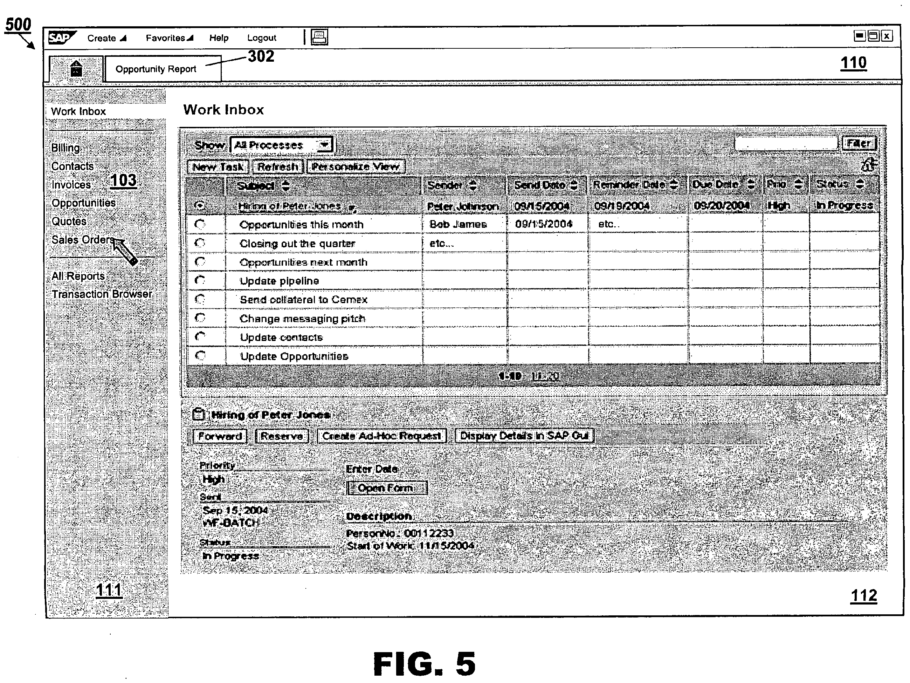

Upon user interaction with the Home tab 105, such as a "mouse-over" (i.e., causing the cursor or pointer to enter an input field, but without clicking in the input field), the navigation area 111 may be caused to appear in the working session corresponding to the launched transaction as shown in the display 400 of FIG. 4. This allows a user to easily navigate to the Work Inbox 102 or other activity 103. In the example of FIG. 4, the Work Inbox 102 is selected, resulting in the example display 500 shown in FIG. 5. FIG. 5 illustrates how clicking on the Work Inbox 102 causes the user interface to navigate from another screen display to the last selected object ("Hiring of Peter Jones" in this example) of the general, aggregated tasks 104. The "Opportunity Report" tab 302 remains displayed in the session area 110 to indicate that this transaction had been launched. This transaction could be made the active, working session by clicking on the tab 302.

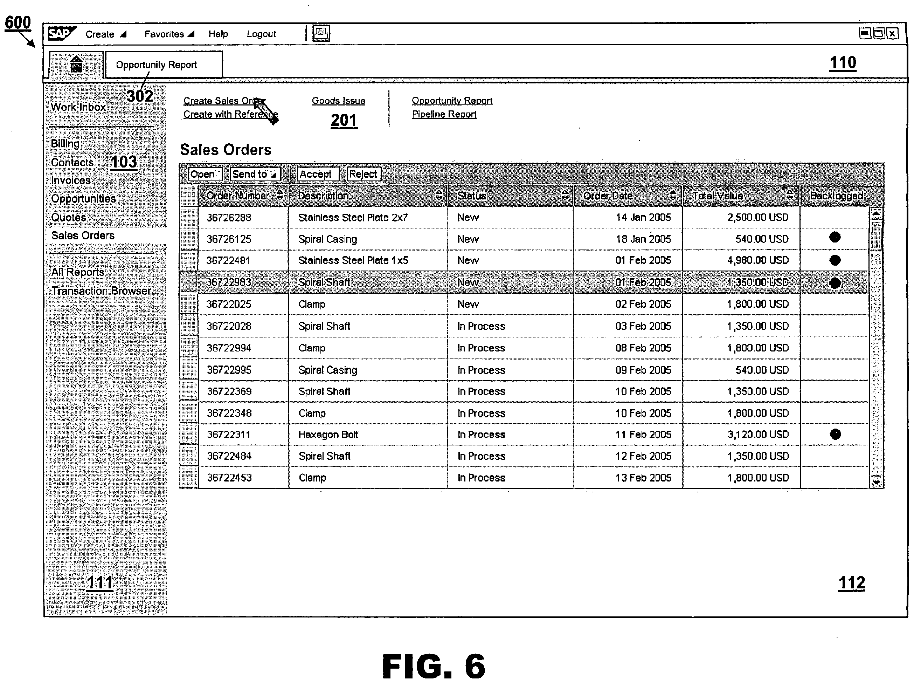

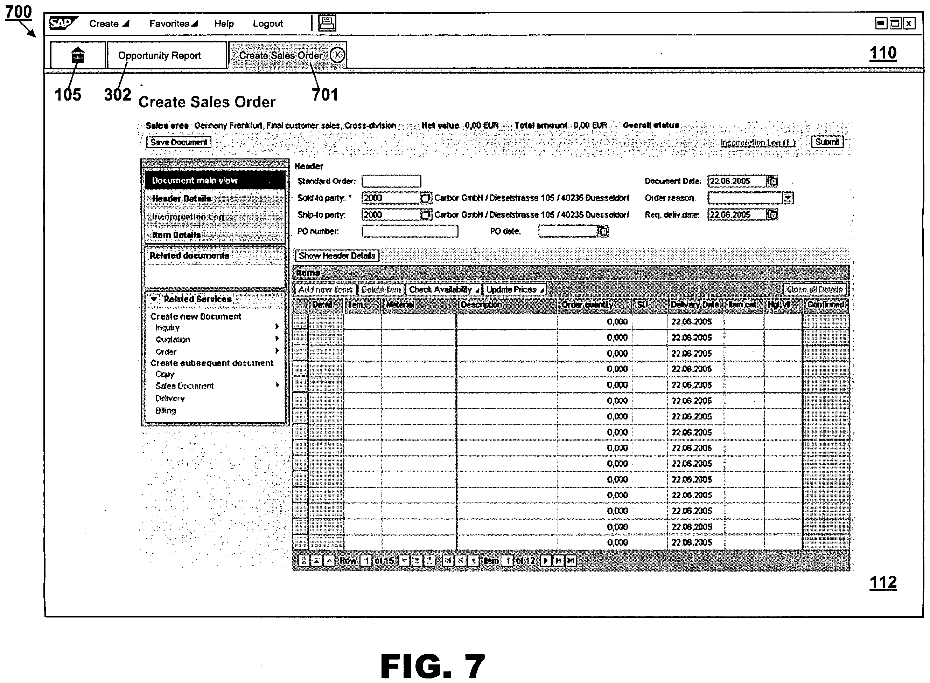

A second (or third or fourth, etc.) transaction may be launched while an earlier-launched transaction moves to the background and becomes inactive, but remains able to be activated to become the active, working session. This is shown in FIGs. 5-7. In FIG. 5, the "Sales Order" activity is again selected from among activities 103. In the resulting display screen 600 of FIG. 6, a second transaction, "Create Sales Order," is selected from the transaction window 201. As a result, a corresponding transaction is launched to become the active working session, as shown in the example display 700 of FIG. 7. Again, the navigation area 111 is no longer displayed, allowing screen area to be devoted mainly to work area 112 of the new working session. Like the "Opportunity Report" transaction 302, the "Create Sales Order" transaction may be a stateful session.

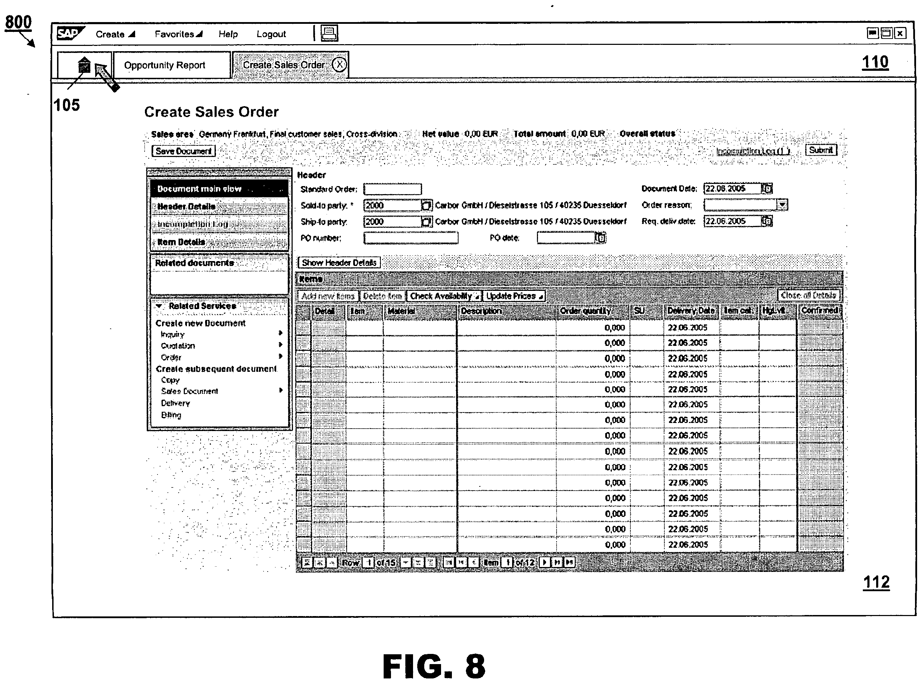

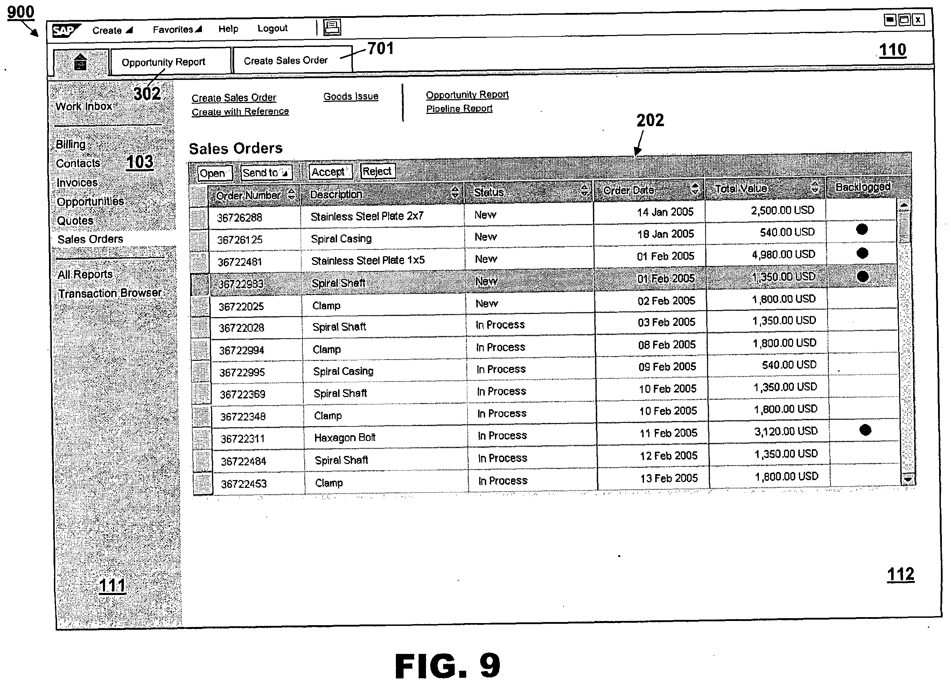

A tab 701 corresponding to the newly launched transaction is displayed in the session area 110 along with the tab 302 indicating the already launched "Opportunity Report" transaction, and the Home tab 105. This enables easy navigation. For example, a user could click on the "Opportunity Report" tab 302 to return to the already launched "Opportunity Report" transaction as represented in FIG. 3, which would then become the working session. Or, the user.could click on the Home tab 105 as shown in the example display 800 of FIG. 8, in order to select another activity. This may result in a display 900 as shown by way of example in FIG. 9. In FIG. 9, the activity "Sales Order" is selected, and the corresponding list of sales order objects 202 and the previous object selection are displayed. From this display, the user could work on the previously-selected sales order or select a different sales order to work on. The launched transaction tabs 302 and 701 for the previously launched transactions remain displayed. This allows the user to easily return to and continue working on a previously launched transaction by simply clicking on the corresponding tab. When its tab is clicked on, a previously launched transaction moves to the foreground and becomes the active, working session in the user interface while the others become inactive until selected again.

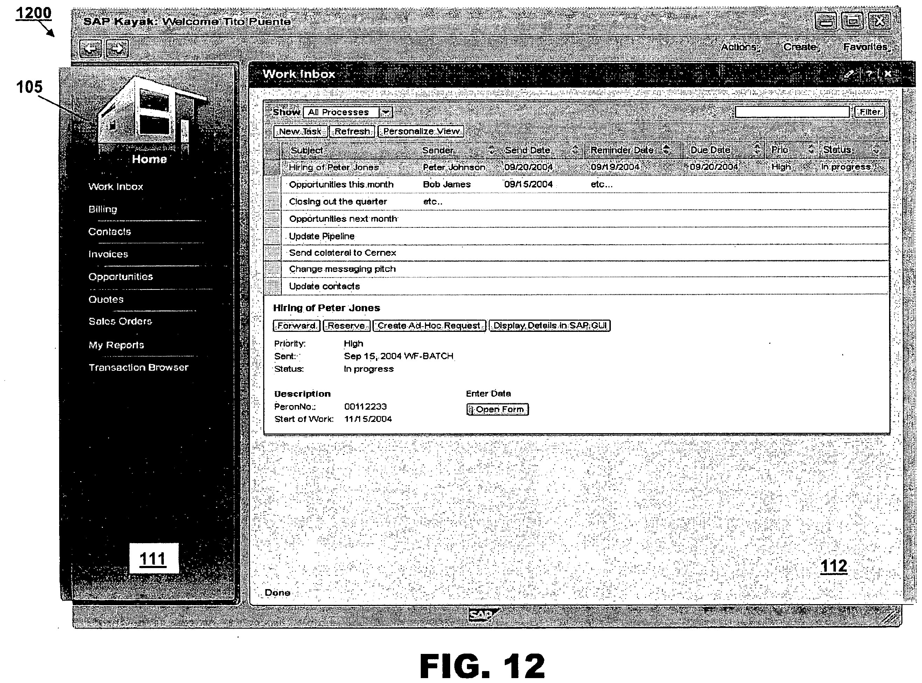

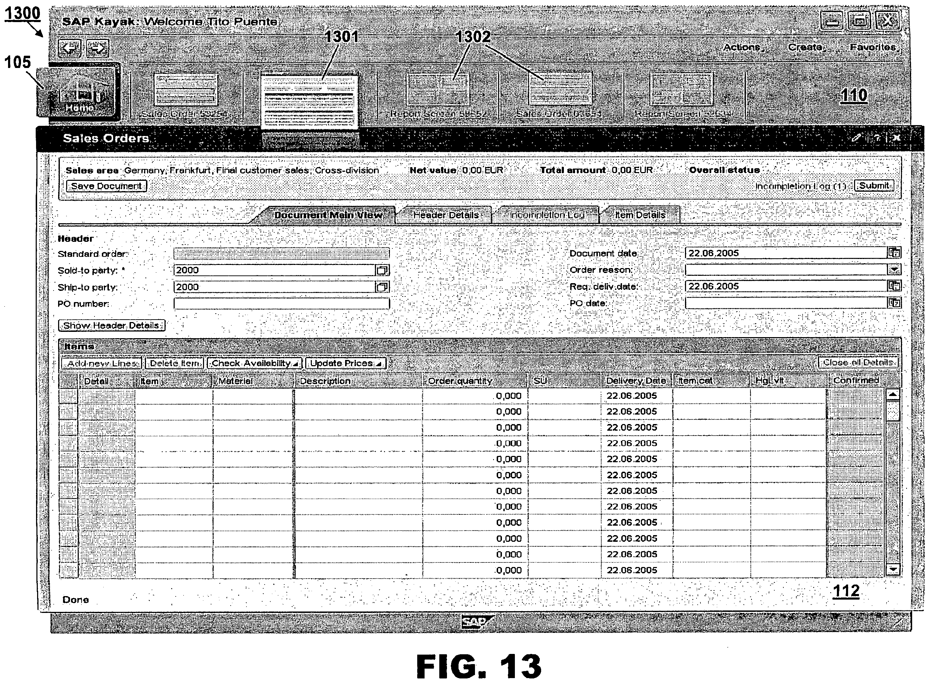

FIGs. 12 and 13 illustrate switching back and forth between an administrative mode and a working mode. FIGs. 12 and 13 have a somewhat different format, but the same functionality, as that of figures previously discussed. The screen display 1200 of FIG. 12 represents an administrative mode in which the full range of navigation functions is available in the navigation area 111, and tasks in the Work Inbox are available for processing. The display 1300 of FIG. 13, by contrast, represents the working mode in which a working session for a selected transaction (a sales order in this example) is open and available to be worked on. In order to optimize screen area for the working mode, the navigation area 111 is hidden, allowing most of the screen real estate to be devoted to the working session.

A highlighted icon 1301 corresponding to the working session may be displayed in the session area 110. Dimmed icons 1302 corresponding to previously launched, but currently non-selected, transactions may also be displayed in the session area 110. Any of these could be made the working session by clicking on it. The Home icon 105 is also displayed. By clicking on the Home icon 105, a user can switch directly from the working mode as shown in FIG. 13, to the administrative mode as shown in FIG. 12. Further, the user can switch directly from the administrative mode back to the working mode for a selected, already launched transaction by clicking on its indicator in the session area 110 (see FIG. 5, e.g.).

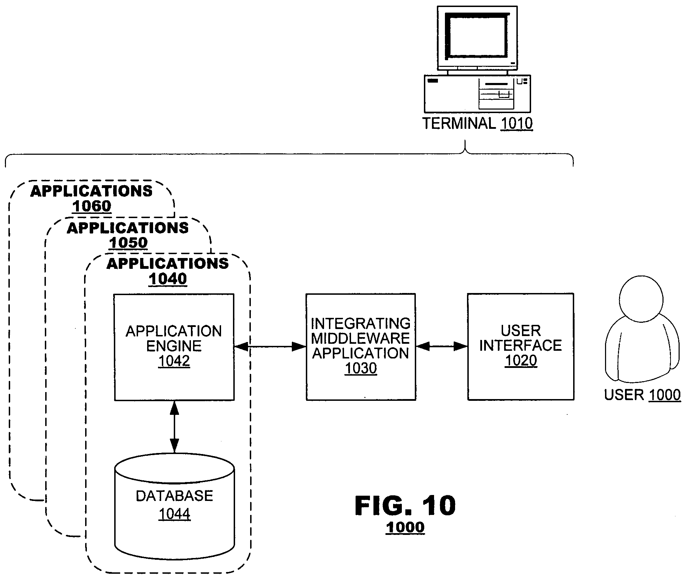

FIG. 10 illustrates a system according to an embodiment of the present invention. A terminal 1010 is available to a user 1000. The terminal 1010 may include an output device such as a display screen and an input device such as a keyboard or a mouse. For example, the terminal 1010 may be a personal computer, a laptop computer, a tablet computer, a personal digital assistant (PDA) or a wireless device such as a cell phone.

The terminal 1010 may include a processor configured to execute various application programs such as browser programs, word processing programs, spreadsheet programs, enterprise management applications and other applications. The terminal 1010 executes an user interface 1020. For example, the user interface 1020 may be implemented as a shell program. The user interface 1020 may comprise functionality as described above in connection with FIGs. 1-9, 12 and 13.

The user interface 1020 may be in communication with an integrating middleware application 1030. The middleware application 1030 may interface between the user interface 1020 and application 1040, which may be an ERP application. Applications 1040 may include an application engine 1042 and a database 1044. More than one application engine may be provided, but only one is depicted. For example, each application engine may execute a plurality of applications.

The application engine 1042 may execute different applications, such as a calendar software, a contacts management software, a customer data entry form, sales order creation form, or other applications. The database 1044 may include data relevant to the applications on the terminal 1010. Database 1044 may include information for each transaction or report available through the applications 1040. Database 1044 may also include business logic defining available actions in applications 1040.

The terminal 1010 may include a plurality of applications. For example, applications 1050 and 1060 may also execute on the terminal 1010. Each of applications 1040, 1050 may have a common architecture including an application engine and a database, while possessing functionality independent of each other. The applications 1040-1060, associated engines and databases may form or be part of a "back-end" responsive to a "front-end" component such as user interface 1020. The back-end includes metadata and functionality configured to associate user information, such as a user role and/or identity, with corresponding role-based content to be presented in the user interface. The user interface collects the user information, for example by way of a logon, and makes a call to the back-end for the appropriate role-based content.

The terminal 1010 may include a network interface configured to communicate with a server. For example, the applications 1040 may be located at the server. In this example embodiment, the middleware application 1030 may communicate with the applications 1040 via the network interface.

A user may interact with user interface 1020 using an input device of the terminal 1010, such as a keyboard or mouse. The user interface 1020 may include computer-executable instructions according to embodiments of the present invention. The instructions, or conventional code that interfaces with the instructions, may be responsive to input signals from the input device, such as clicking on an input field of a screen display or performing a mouse-over. The instructions, or conventional code that interfaces with the instructions, may respond to the signals by performing navigation operations, launching transactions, generating corresponding displays, and so on.

Embodiments of the present invention may, for example, include object-oriented functionality. As is known, a software object may represent various relationships among data, classes, interfaces, methods, services and other object-oriented concepts. Linkages may be formed between objects. Though it is typically transparent to the object-oriented programmer, in embodiments objects may be implemented at least in part as tables comprising a plurality of modifiable entries that collectively exhibit the behavior that characterizes an object and that can logically link objects.

Computer-executable instructions according to embodiments of the present invention may be stored on any machine-readable medium, such as a RAM (random access memory), ROM (read-only memory) or fixed disk of terminal 1010, on floppy disk, CD-ROM, magnetic tape, or the like. The computer-executable instructions may be distributed across a plurality of media, such as on physically separate storage devices respectively associated with physically separate computer systems that may communicate via a network. The instructions may be loaded from a machine-readable medium into a memory of terminal 1010 for execution by a processor of terminal 1010. The instructions when executed may perform functionality according to embodiments of the present invention. The functionality disclosed herein may find specific implementations in a variety of forms, which are considered to be within the abilities of those of ordinary skill in the pertinent art after having reviewed the specification.

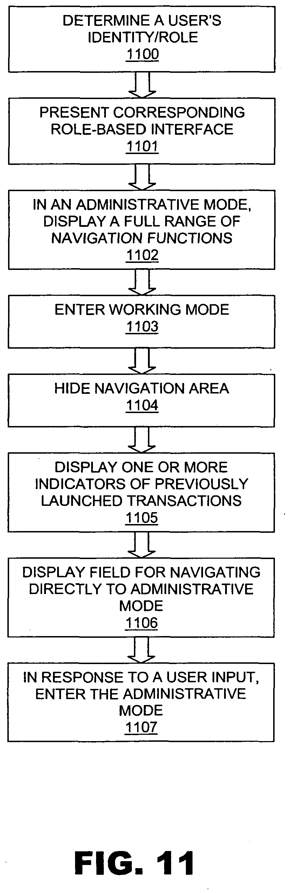

In view of the above, FIG. 11 shows a method according to embodiments of the present invention, that may be performed at least in part by executing instructions according to embodiments of the present invention on a computer such as terminal 1010.

As shown in block 1100, it may be determined, for example by way of a logon or other user identifier, what the identity and/or corresponding role of a user is. Based on the user's identity and/or role, a corresponding role-based user interface may be generated shown in block 1101. As shown in block 1102, in an administrative mode of the user interface, a full range of navigation functions may be displayed in a navigation area of the interface.

Subsequently, a number of operations may be performed on the user interface. In particular, operations to enter a working mode may be performed, as shown in block 1103. When in the working mode, the navigation area may hidden, as shown in block 1104. A session area comprising indicators of one or more previously launched transactions may be displayed, as shown in block 1105. Furthermore, in the working mode, a field (the Home icon) for navigating directly to the administrative mode may be displayed, as shown in block 1106. In response to a user input in the field, the user interface may directly enter the administrative mode again, as shown in block 1107. Subsequently, in response to a user input in a selected indicator of a previously launched transaction, the user interface may directly re-enter the working mode for a selected transaction.

## Claims

1. A method for operating a role-based user interface (1020) for an enterprise resource management application, the method comprising:
providing a system having a terminal (1010) being available to a user (1000) and executing the user interface (1020);
providing an application (1040, 1050, 1060), the application (1040, 1050, 1060) forming or being part of a back-end responsive to the user interface (1020);
the user interface (1020) collecting user information;
the user interface (1020) making a call to the back-end for appropriate role-based content;
**characterized in that** the method further comprises
in an administrative mode of the user interface (1020), presenting a full range of navigation functions in a navigation area (111) of the interface (1020);
in a working mode of the user interface (1020), hiding the navigation area (111) while presenting a working session of a launched transaction corresponding to a role-based activity;
in response to a user input, navigating directly from the working mode to the administrative mode; and
in response to a user input, navigating directly from the administrative mode to the working mode; wherein
the back end includes metadata and functionality configured to associate user information, user role and/or identity, with corresponding role-based content to be present in the user interface (1020), wherein
in response to selecting a given role-based activity, the user interface (1020) collects or aggregates business objects from background applications that match both a user's role and the selected activity category;
the method further comprising:
entering the administrative mode of the interface (1020), the administrative mode including the navigation area (111) having the full range of navigation functions to navigate among role-based objects and activities;
from the administrative mode, navigating to the selected activity;
in response to an input in a transaction window (201) of the selected activity, entering the working mode of the user interface (1020), the working mode including launching the transaction corresponding to the selected activity;
hiding the navigation area (111) while in the working mode;
displaying an indicator for the launched transaction in a session area (110);
displaying a field for navigating directly to the administrative mode;
in response to an input in the field, navigating directly from the working mode to the administrative mode.

2. The method of claim 1, wherein in the administrative mode, the user interface (1020) further presents an aggregated list (104) of selectable tasks.

3. The method of claim 1 or 2, wherein in the working mode, a session area (110) comprising indicators (302, 701) of one or more previously launched transactions is displayed.

4. The method of claim 3, wherein an indicator (302, 701) for a currently selected transaction is highlighted.

5. The method of claim 3 or 4, wherein an indicator (302, 701) for a non-selected transaction is dimmed.

6. The method of any one of the preceding claims, wherein in the working mode, a field (105) for navigating directly to the administrative mode is displayed.

7. The method of any one of the preceding claims, further comprising:
displaying a plurality of indicators (302, 701) of launched transactions.

8. The method of claim 7, further comprising:
from the administrative mode, in response to an input in a selected indicator (302, 701), switching to the working mode for the corresponding transaction.

9. The method of claim 7 or 8, wherein an indicator (302, 701) for a currently selected transaction is highlighted.

10. The method of any one of claims 7 to 9, wherein an indicator (302, 701) for a non-selected transaction is dimmed.

11. A machine-readable medium tangibly embodying computer-executable instructions that, when executed by a processor, perform a method according to claim 1.

## Patentansprüche

1. Ein Verfahren für den Betrieb einer rollenbasierten Benutzerschnittstelle (1020) für eine Ressourcenmanagement-Anwendung in Unternehmen, wobei das Verfahren Folgendes umfasst:
bereitstellen eines Systems, das ein Terminal (1010) aufweist, das einem Benutzer (1000) zur Verfügung steht und die Benutzerschnittstelle (1020) ausführt;
bereitstellen einer Anwendung (1040, 1050, 1060), wobei die Anwendung (1040, 1050, 1060) ein Back-End bildet, das auf die Benutzerschnittstelle (1020) anspricht oder ein Teil davon ist;
wobei die Benutzerschnittstelle (1020) Benutzerinformationen sammelt;
wobei die Benutzerschnittstelle (1020) eine Forderung an das Back-End nach angemessenem rollenbasierten Inhalt stellt;
**dadurch gekennzeichnet, dass** das Verfahren des Weiteren Folgendes umfasst:
in einem Verwaltungsmodus der Benutzerschnittstelle (1020), vorweisen einer breiten Palette an Navigationsfunktionen in einem Navigationsbereich (111) der Schnittstelle (1020);
in einem Arbeitsmodus der Benutzerschnittstelle (1020), verbergen des Navigationsbereichs (111) bei gleichzeitigem Vorweisen einer Arbeitssitzung einer gestarteten Transaktion, die einer rollenbasierten Aktivität entspricht;
als Reaktion auf eine Benutzereingabe, navigieren direkt vom Arbeitsmodus in den Verwaltungsmodus; und
als Reaktion auf eine Benutzereingabe, navigieren direkt vom Verwaltungsmodus in den Arbeitsmodus; wobei
das Back-End Metadaten und Funktionalitäten enthält, die konfiguriert sind, um Benutzerinformationen, eine Benutzer-Rolle und/oder -Identität mit entsprechendem rollenbasiertem Inhalt zu verknüpfen, der in der Benutzerschnittstelle (1020) vorliegen soll, wobei
als Reaktion auf das Auswählen einer gegebenen rollenbasierten Aktivität, die Benutzerschnittstelle (1020) Geschäftsobjekte aus Hintergrund-Anwendungen sammelt oder zusammenstellt, die sowohl mit einer Benutzerrolle als auch mit der gewählten Aktivitätskategorie übereinstimmen;
wobei das Verfahren des Weiteren Folgendes umfasst:
eintreten in den Verwaltungsmodus der Benutzerschnittstelle (1020), wobei der Verwaltungsmodus den Navigationsbereich (111) beinhaltet, der die breite Palette an Navigationsfunktionen aufweist, um zwischen rollenbasierten Objekten und Aktivitäten zu navigieren;
aus dem Verwaltungsmodus, navigieren zur gewählten Aktivität;
als Reaktion auf eine Eingabe in ein Transaktionsfenster (201) der gewählten Aktivität, eintreten in den Arbeitsmodus der Benutzerschnittstelle (1020), wobei der Arbeitsmodus das Starten der Transaktion beinhaltet, die der gewählten Aktivität entspricht;
verbergen des Navigationsbereichs (111), im Arbeitsmodus;
anzeigen eines Indikators für die gestartete Transaktion in einem Sitzungsbereich (110);
anzeigen eines Feldes, um direkt in den Verwaltungsmodus zu navigieren;
als Reaktion auf eine Eingabe in das Feld, navigieren direkt vom Arbeitsmodus in den Verwaltungsmodus.

2. Das Verfahren nach Anspruch 1, wobei im Verwaltungsmodus die Benutzerschnittstelle (1020) des Weiteren eine zusammengetragene Liste (104) von wählbaren Aufgaben aufweist.

3. Das Verfahren nach Anspruch 1 oder 2, wobei im Arbeitsmodus ein Sitzungsbereich (110) angezeigt wird, der Indikatoren (302, 701) zu einer oder mehreren der zuvor gestarteten Transaktionen umfasst.

4. Das Verfahren nach Anspruch 3, wobei ein Indikator (302, 701) für eine aktuell ausgewählte Transaktion hervorgehoben wird.

5. Das Verfahren nach Anspruch 3 oder 4, wobei ein Indikator (302, 701) für eine nicht ausgewählte Transaktion gedimmt wird.

6. Das Verfahren nach irgendeinem der vorhergehenden Ansprüche, wobei im Arbeitsmodus ein Feld (105) zur direkten Navigation in den Verwaltungsmodus angezeigt wird.

7. Das Verfahren nach irgendeinem der vorhergehenden Ansprüche, das des Weiteren Folgendes umfasst:
anzeigen einer Vielzahl an Indikatoren (302, 701) zu gestarteten Transaktionen.

8. Das Verfahren nach Anspruch 7, das des Weiteren Folgendes umfasst:
aus dem Verwaltungsmodus, als Reaktion auf eine Eingabe in einen gewählten Indikator (302, 701), umschalten in den Arbeitsmodus für die entsprechende Transaktion.

9. Das Verfahren nach Anspruch 7 oder 8, wobei ein Indikator (302, 701) für eine aktuell ausgewählte Transaktion hervorgehoben wird.

10. Das Verfahren nach irgendeinem der Ansprüche 7 bis 9, wobei ein Indikator (302, 701) für eine nicht ausgewählte Transaktion gedimmt wird.

11. Ein maschinenlesbarer Träger, der physisch von einem Computer ausführbare Anweisungen enthält, die, wenn von einem Prozessor ausgeführt, ein Verfahren nach Anspruch 1 durchführen.

## Revendications

1. Un procédé d'exploitation d'une interface utilisateur basée sur des rôles (1020) pour une application de gestion de ressources d'entreprise, le procédé comprenant le fait de :
fournir un système qui présente un terminal (1010) disponible à un utilisateur (1000) et exécutant l'interface utilisateur (1020) ;
fournir une application (1040, 1050, 1060), l'application (1040, 1050, 1060) formant ou faisant partie d'un *back-end* répondant à l'interface utilisateur (1020) ;
l'interface utilisateur (1020) recueillant des informations d'utilisateur ;
l'interface utilisateur (1020) appelant le *back-end* pour un contenu approprié basé sur des rôles ;
**caractérisé en ce que** le procédé comprend en outre
dans un mode administratif de l'interface utilisateur (1020), présenter une gamme complète de fonctions de navigation dans une zone de navigation (111) de l'interface (1020) ;
dans un mode travail de l'interface utilisateur (1020), cacher la zone de navigation (111) tout en présentant une session de travail d'une transaction lancée qui correspond à une activité basée sur des rôles ;
en réponse à une entrée d'utilisateur, naviguer directement du mode travail au mode administratif ; et
en réponse à une entrée d'utilisateur, naviguer directement du mode administratif au mode travail ; sachant que
le *back-end* inclut des métadonnées et une fonctionnalité configurées pour associer une information d'utilisateur, un rôle et/ou une identité d'utilisateur correspondant à un contenu, basé sur un rôle, à présenter dans l'interface utilisateur (1020), sachant que
en réponse à l'action de sélection d'une activité basée sur des rôles, l'interface utilisateur (1020) recueille ou regroupe des objets commerciaux à partir des applications d'arrière plan, qui correspondent à la fois à un rôle d'utilisateur et à la catégorie d'activité sélectionnée ;
le procédé comprenant en outre le fait de :
entrer dans le mode administratif de l'interface (1020), le mode administratif incluant la zone de navigation (111) présentant la gamme complète de fonctions de navigation pour naviguer parmi les objets et les activités basés sur des rôles ;
en partant du mode administratif, naviguer jusqu'à l'activité sélectionnée ;
en réponse à une entrée dans une fenêtre de transaction (201) d'une activité sélectionnée, entrer dans le mode travail de l'interface utilisateur (1020), le mode travail incluant le fait de lancer la transaction qui correspond à l'activité sélectionnée ;
cacher la zone de navigation (111) pendant le mode travail ;
afficher un indicateur pour la transaction lancée dans une zone de session (110);
afficher un champ pour naviguer directement jusqu'au mode administratif ;
en réponse à une entrée dans le champ, naviguer directement à partir du mode travail jusqu'au mode administratif.

2. Le procédé d'après la revendication 1, sachant que dans le mode administratif, l'interface utilisateur (1020) présente en outre une liste regroupée (104) de tâches pouvant être sélectionnées.

3. Le procédé d'après la revendication 1 ou 2, sachant que dans le mode travail une zone de session (110) comprenant des indicateurs (302, 701) d'une ou de plusieurs transactions lancées au préalable est affichée.

4. Le procédé d'après la revendication 3, sachant qu'un indicateur (302, 701) pour une transaction actuellement sélectionnée est mis en évidence.

5. Le procédé d'après la revendication 3 ou 4, sachant qu'un indicateur (302, 701) pour une transaction non sélectionnée est atténué.

6. Le procédé d'après une quelconque des revendications précédentes, sachant que dans le mode travail un champ (105) est affiché pour naviguer directement jusqu'au mode administratif.

7. Le procédé d'après une quelconque des revendications précédentes, comprenant en outre le fait de :
afficher une pluralité d'indicateurs (302, 701) de transactions lancées.

8. Le procédé d'après la revendication 7, comprenant en outre le fait de :
à partir du mode administratif, en réponse à une entrée dans un indicateur (302, 701) sélectionné, passer au mode travail pour la transaction correspondante.

9. Le procédé d'après la revendication 7 ou 8, sachant qu'un indicateur (302, 701) pour une transaction actuellement sélectionnée est mis en évidence.

10. Le procédé d'après une quelconque des revendications de 7 à 9, sachant qu'un indicateur (302, 701) pour une transaction non sélectionnée est atténué.

11. Un support lisible par machine incorporant de manière tangible des instructions exécutables par ordinateur, lesquelles, lorsqu'elles sont exécutées par un processeur, mettent en oeuvre un procédé d'après la revendication 1.
